# EUROPÄISCHE PATENTSCHRIFT

(11) **EP 1 270 288 B1**
(45) Veröffentlichungstag und Bekanntmachung des Hinweises auf die Patenterteilung: **13.09.2006**
(21) Anmeldenummer: 02014270.9
(22) Anmeldetag: 26.06.2002
(51) Int. Cl.: B60H 1/00, B60H 1/22

(54) **Zur Anordnung in einem zu beheizenden Raum, insbesondere Fahrgastraum eines Fahrzeugs, vorgesehene Heizeinrichtung**
Heating apparatus for a compartment to be heated, in particular a passenger compartment of a vehicle
Appareil de chauffage pour un espace chauffé, notamment pour l'habitacle d'un véhicule automobile

(30) Priorität: 26.06.2001 DE 10130743
(43) Veröffentlichungstag der Anmeldung: 02.01.2003
(73) Patentinhaber: J. Eberspächer GmbH & Co. KG, 73730 Esslingen (DE)
(72) Erfinder: Alber, Andreas, 70619 Stuttgart (DE); Haber, Peter, 73035 Göppingen (DE); Collmer, Andreas, 73760 Ostfildern (DE)
(74) Vertreter: Ruttensperger, Bernhard

(56) Entgegenhaltungen:
- EP-A- 1 108 574
- DE-A- 3 839 243
- DE-A- 19 620 921
- FR-A- 2 592 617

## Beschreibung

Die vorliegende Erfindung betrifft eine Heizeinrichtung zur Anordnung in einem zu beheizenden Raum, insbesondere Fahrgastraum eines Fahrzeugs, umfassend eine Heizeranordnung, eine Wärmetauscheranordnung zur Erwärmung von die Heizeinrichtung durchströmender Luft sowie einen Luftführungskanalbereich, über welchen die von der Wärmetauscheranordnung erwärmte Luft zu einer Austrittsdüsenanordnung geleitet wird.

In modernen Kraftfahrzeugen werden immer häufiger zusätzlich zu der bereits durch Wärmeabfuhr aus dem Bereich des Antriebsaggregats bereitgestellten Möglichkeit der Erwärmung eines Fahrgastraums Heizeinrichtungen bereitgestellt, die beispielsweise zur Erfüllung der Funktion einer Standheizung oder zur Erwärmung des Innenraums der Fahrgastkabinen eines Lastkraftwagens oder dergleichen im Fahrgastraum, also demjenigen Raum, in welchem der Fahrer und ggf. zusätzliche Fahrgäste im Betrieb eines Fahrzeugs sich befinden, für Erwärmung sorgen. Derartige Heizeinrichtungen, die als Heizeranordnungen beispielsweise mit Brennstoff gespeiste Heizbrenner umfassen können, nehmen die Verbrennungsluft über entsprechende Leitungen von außen, also außerhalb des Fahrgastraums, auf und geben die Verbrennungsabgase auch wieder nach außen ab. Die zu beheizende Luft wird über eine Lufteintrittsöffnung dem Fahrgastraum entnommen, wird in einem Wärmetauscher erwärmt und dann über eine Austrittsdüsenanordnung wieder in den Fahrgastraum abgegeben.

Aus der DE 38 39 243 A1 ist eine Heizeinrichtung für ein Fahrzeug bekannt, bei welcher die in einem Brenner erzeugte Wärme auf eine Flüssigkeit als zu erwärmendes Medium übertragen wird. Wie im obengenannten Dokument ausgeführt ist, kann der Wärmeträger gasförmig (Luft) sein, austelle von einer Flussigkeit. Die Verbrennungsabgase strömen nach dem Durchströmen einer Wärmetauscheranordnung in eine an das Heizgerät angesetzte Abgasleitung, die nach Art einer Schlauchleitung oder dergleichen ausgebildet ist. In ihrem von der Heizeinrichtung entfernten Endbereich weist diese Abgasleitung einen Schalldämpfer in Form eines in den Schlauch eingesetzten, konzentrischen Rohrabschnitts auf, so dass zwischen diesem Rohrabschnitt und dem Schlauch selbst ein ringförmiger und zur Schallabsorption beitragender Raum gebildet ist.

Die DE 196 20 921 A1 offenbart ein aus mehreren Teilen zusammengesetztes Armaturenbrett für ein Fahrzeug. Durch das Zusammenfügen mehrerer Teile und deren Formgebung werden ohne zusätzliche Leitungen im Inneren des Armaturenbrettes Hohlräume gebildet, die zum Einleiten von beispielsweise erwärmter Luft in den Fahrzeuginnenraum dienen. In denjenigen Bereichen, in welchen die zum Leiten von Luft dienenden Hohlräume im Armaturenbrett stärkere Biegungen aufweisen, ist Schallabsorptionsmaterial vorgesehen.

Die EP 1 108 574 A1 offenbart eine Anordnung zum Einleiten von Luft in den Innenraum eines Fahrzeugs. Diese Anordnung weist eine Mehrzahl von Ausströmbereichen auf, wobei ein zentraler Bereich eine langgestreckte Öffnung bildet, während beidseits daran angesetzte seitliche Bereiche eine Vielzahl nebeneinander angeordneter Austrittsöffnungen bereitstellen.

Die FR 2 592 617 A1 offenbart einen Fahrzeugsitz mit im Bereich der Rückenlehne vorgesehener Lufteinleitung in den Fahrzeuginnenraum. Die Luft tritt dabei in Richtung zum hinteren Bereich des Fahrzeugs aus dem Sitz aus.

Da vor allem im Fahrzeugbau die Anforderungen an den Komfort ständig steigen, ist es das Ziel der vorliegenden Erfindung, eine zur Anordnung in einem zu beheizenden Raum, insbesondere Fahrgastraum eines Fahrzeugs, vorgesehene Heizeinrichtung bereitzustellen, bei welcher neben dem gewünschten Effekt der Erwärmung des zu beheizenden Raums ungewünschte Nebeneffekte so weit als möglich vermieden werden.

Zur Lösung dieser Aufgabe ist gemäß einem ersten Aspekt der vorliegenden Erfindung eine zur Anordnung in einem zu beheizenden Raum, insbesondere Fahrgastraum eines Fahrzeugs, vorgesehene Heizeinrichtung bereitgestellt, umfassend eine Heizeranordnung, eine Wärmetauscheranordnung zur Erwärmung von die Heizeinrichtung durchströmender Luft sowie einen Luftführungskanalbereich, über welchen die von der Wärmetauscheranordnung erwärmte Luft zu einer Austrittsdüsenanordnung geleitet wird,

Gemäß der vorliegenden Erfindung ist weiter vorgesehen, dass dem Luftführungskanalbereich eine Schalldämpfungsanordnung zugeordnet ist.

Beim Durchströmen der Heizeinrichtung werden Strömungsgeräusche erzeugt, und insbesondere kann das die Heizeinrichtung durchströmende Medium, also die zu beheizende Luft, als Träger für im Bereich des Brenners erzeugte Geräusche wirken. Durch das Bereitstellen einer Schalldämpfungsanordnung in dem die erwärmte Luft führenden Bereich wird die Geräuschbelästigung in dem zu beheizenden Raum deutlich gemindert.

Aufgrund der oftmals beschränkten räumlichen Verhältnisse ist ferner vorgesehen, dass der Luftführungskanalbereich wenigstens bereichsweise mit abgeflachtem Strömungsquerschnitt ausgebildet ist und dass an wenigstens einer Breitseite die Schalldämpfungsanordnung den Luftführungskanalbereich wenigstens bereichsweise begrenzt.

Um eine möglichst effiziente Schalldämpfung erzielen zu können, wird vorgeschlagen, dass die Schalldämpfungsanordnung ein flexibles Schalldämpfungsmaterial, vorzugsweise Filzmaterial, beispielsweise kunstharzgebundener Glasfaserfilz, Vliesmaterial, Fasermattenmaterial, Schaumstoff oder dergleichen, umfasst.

Einen erheblichen Beitrag sowohl zur Schalldämpfung als auch zur Führung der erwärmten Luft in Richtung zur Austrittsdüsenanordnung kann ein Luftführungselement liefern, das mit einer Mehrzahl von Öffnungen versehen ist. Insbesondere dann, wenn das vorangehend angesprochene flexible Schalldämpfungsmaterial zum Einsatz kommt, welches oftmals eine vergleichsweise geringe Formstabilität aufweist, kann es vorteilhaft sein, wenn das flexible Schalldämpfungsmaterial an einer von dem Luftführungskanalbereich abgewandten Seite des Luftführungselementes vorgesehen ist.

Gemäß einem weiteren Aspekt der vorliegenden Erfindung wird bei einer eingangs genannten Heizeinrichtung eine deutliche Erhöhung des Komforts erhalten, wenn im Bereich der Austrittsdüsenanordnung eine Diffusoranordnung vorgesehen ist. Eine derartige Diffusoranordnung hat zur Folge, dass die austretende erwärmte Luft nicht in einen vergleichsweise stark fokussierten, in einen kleinen Raumbereich gerichteten Strahl austritt. Vielmehr wird eine Verwirbelung und Ausweitung des Luftstroms erhalten, mit der Folge, dass eine schnelle gleichmäßige Verteilung der erwärmten Luft in dem zu erwärmenden Raum auftritt.

Beispielsweise kann vorgesehen sein, dass die Diffusoranordnung an einem Austrittsdüsenrandbereich vorgesehen ist. Das Bereitstellen einer derartigen Diffusoranordnung im Randbereich der Austrittsdüsenanordnung kann in einfacher Weise dadurch erlangt werden, dass die Diffusoranordnung wenigstens teilweise durch einen vorzugsweise wellenartig konturierten Austrittsrandbereich der Austrittsdüsenanordnung gebildet ist.

Bei einer alternativen, selbstverständlich in Verbindung mit den vorangehenden Merkmalsgruppen einsetzbaren Ausgestaltungsform kann weiter vorgesehen sein, dass die Diffusoranordnung wenigstens ein im Bereich einer Austrittsöffnung der Austrittsdüsenanordnung angeordnetes Diffusorelement umfasst. Derartige in dem Bereich der Austrittsöffnung positionierte Diffusorelemente können von der ausströmenden Luft im Wesentlichen vollständig umströmt werden und führen somit zu einer sehr effizienten Turbulenzerzeugung und somit Verteilung der austretenden erwärmten Luft in dem zu erwärmenden Raum.

Hier kann beispielsweise vorgesehen sein, dass das wenigstens eine Diffusorelement kegelartig ausgebildet ist.

Gemäß einem weiteren Ausgestaltungsform wird vorgeschlagen, dass wenigstens eine Neben-Lufteintrittsöffnung vorgesehen ist, durch welche Umgebungsluft in den Luftführungskanalbereich eintreten kann.

Die Umgebungsluft, also die in dem zu erwärmenden Raum in der Nähe der Heizeinrichtung vorgesehene Luft weist im Allgemeinen eine deutlich geringere Temperatur auf, als die in der Heizeinrichtung im Bereich der Wärmetauscheranordnung erwärmte Luft. Durch das Bereitstellen einer derartigen Neben-Lufteintrittsöffnung wird bereits vor dem Austreten der erwärmten Luft eine Durchmischung mit Luft geringerer Temperatur erzielt, mit der Folge, dass eine lokale Überhitzung in dem zu erwärmenden Raumbereich nahe dem Bereich, in dem die erwärmte Luft aus der Heizeinrichtung austritt, vermieden werden kann.

Hier ist vorzugsweise vorgesehen, dass die wenigstens eine Neben-Lufteintrittsöffnung im Bereich der Austrittsdüsenanordnung vorgesehen ist.

Um dafür zu sorgen, dass zwar in den Strom der erwärmten Luft kühlere Umgebungsluft eintreten kann, dass jedoch nicht bereits vor Erreichen der Austrittsdüsenanordnung erwärmte Luft an anderen Bereichen aus der Heizeinrichtung austritt, kann der wenigstens einen Neben-Lufteintrittsöffnung ein Abschirmorgan zugeordnet sein, durch welches die wenigstens eine Neben-Lufteintrittsöffnung gegen den Austritt von in dem Luftführungskanalbereich strömender, erwärmter Luft abgeschirmt ist.

Um den insbesondere beim Einsatz in einem Fahrzeug vorhandenen Bauraum innerhalb eines Fahrgastraumes möglichst effizient nutzen zu können, kann die erfindungsgemäße Heizeinrichtung für eine Trägeranordnung zum Positionieren oder unter einem Fahrzeugsitz umfassen.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine perspektivische Ansicht einer erfindungsgemäßen Heizeinrichtung mit einem kastenartigen Träger;
- Fig. 2: eine perspektivische Explosionsansicht wesentlicher Komponenten der erfindungsgemäßen Heizeinrichtung;
- Fig. 3: eine perspektivische Ansicht einer vorteilhaften Ausgestaltungsform der erfindungsgemäßen Heizeinrichtung mit Diffusoranordnung;
- Fig. 4: die in Fig. 3 dargestellte Heizeinrichtung, betrachtet aus anderer Perspektive;
- Fig. 5: eine perspektivische Ansicht einer weiteren Ausgestaltungsart einer erfindungsgemäßen Heizeinrichtung mit Diffusoranordnung;
- Fig. 6: eine perspektivische Ansicht einer weiteren Ausgestaltungsform der erfindungsgemäßen Heizeinrichtung mit Neben-Lufteinrittsöffnungen;
- Fig. 7: die Heizeinrichtung der Fig. 6, betrachtet in anderer Perspektive.

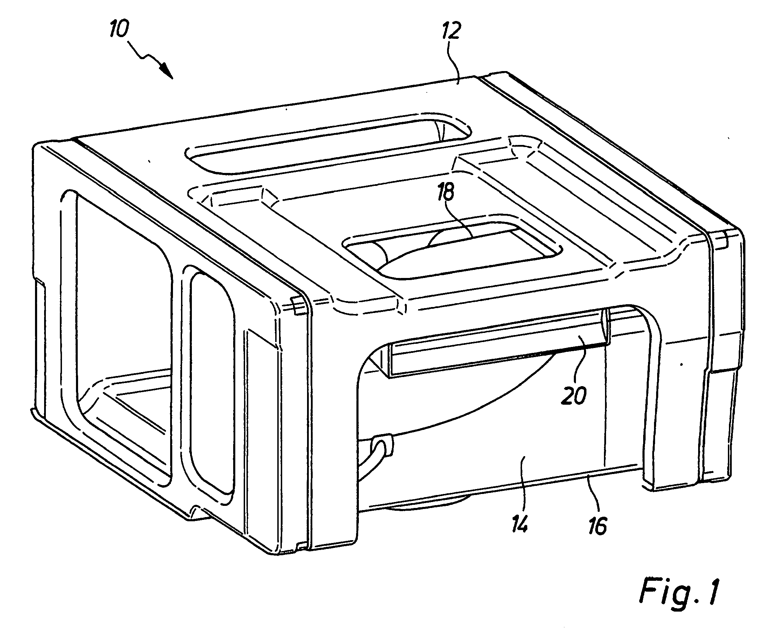

In Fig. 1 ist eine erfindungsgemäße Heizeinrichtung 10 dargestellt. Diese umfasst einen kastenartigen Träger 12, welcher derart geformt ist, dass er beispielsweise unter dem Fahrersitz oder Beifahrersitz eines Kraftfahrzeugs, beispielsweise Lastkraftwagen, angebracht werden kann, d. h. dort fest montiert werden kann. Der Träger 12 kann auch einen Teil des Sitzes selbst bilden und beispielsweise der Sitzkasten sein. Auch ist die Unterbringung an anderen Bereichen in einem Fahrgastraum oder einer Fahrerkabine möglich. Die Heizeinrichtung 10 umfasst einen Heizbrenner 14, welcher von herkömmlicher Bauart sein kann, und beispielsweise ein in einem Brennergehäuse 16 angeordnetes Flammrohr und dergleichen aufweisen kann. Von dem Heizbrenner 14 erwärmte Luft strömt über einen nachfolgend noch näher beschriebenen Luftführungskanalbereich 18 zu einer Austrittsdüse 20, von welcher sie in den Innenraum der Fahrgastkabine eintritt.

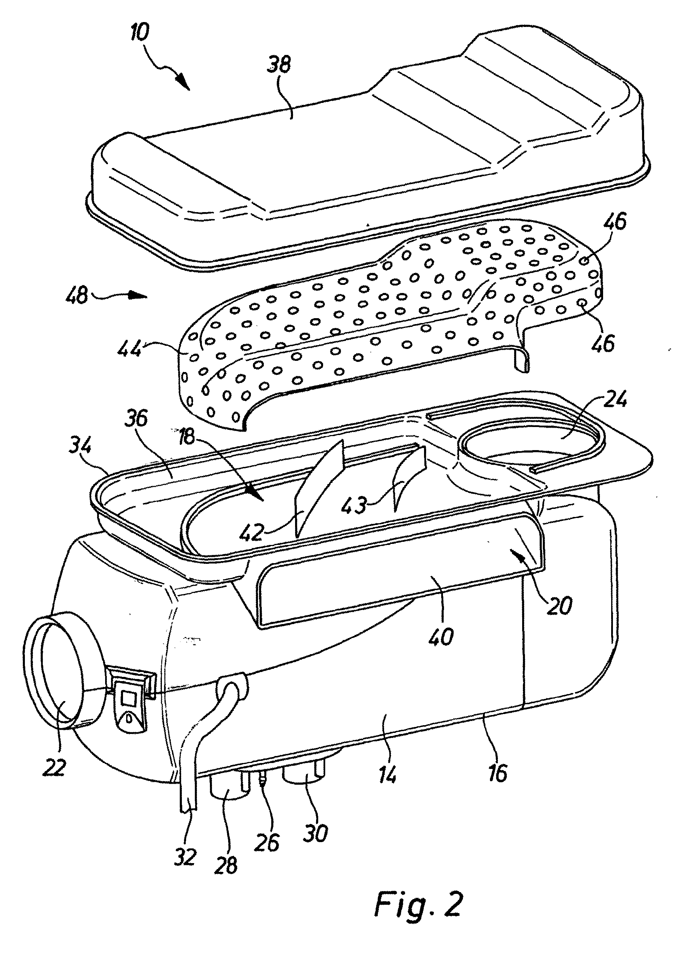

In Fig. 2 erkennt man den Heizbrenner 14 mit dem diesen zur Abgabe von erwärmter Luft zugeordneten Komponenten in explosionsartiger Darstellung. Im Endbereich des langgestreckten Brennergehäuses 16 ist eine Lufteintrittsöffnung 22 vorgesehen. Über diese Lufteintrittsöffnung 22 tritt aus dem zu erwärmenden Raum Luft ein, um, beispielsweise gefördert durch ein nicht dargestelltes Gebläse, in einen Wärmetauscherbereich zu strömen, der im Inneren des Brennergehäuses 16 vorgesehen ist. Die durch den Wärmetauscherbereich hindurchgeströmte Luft verlässt diesen Wärmetauscherbereich über eine weitere Öffnung 24 und tritt von dort in den Luftführungskanalbereich 18 ein.

Zunächst sei noch ausgeführt, dass an der Unterseite des Brennergehäuses 12 ein Anschlussstutzen 26 für eine Brennstoffleitung vorgesehen ist. Ferner sind zwei Anschlusssstutzen 28, 30 vorgesehen. An diese beiden Anschlussstutzen 28, 30 werden eine Brennluftzuführleitung bzw. eine Abgasabführleitung angeschlossen. Über die Brennluftzuführleitung wird Verbrennungsluft von außen aufgenommen. Über die Abgasabführleitung werden die Verbrennungsabgase nach außen hin ausgestoßen. Ferner mündet in das Brennergehäuse 16 eine elektrische Verbindung 32 ein, über welche verschiedene Funktionen des Heizbrenners 14 angesteuert werden, wie z. B. das bereits angesprochene Gebläse.

Der Luftführungskanalbereich 18 ist allgemein in einem in Fig. 2 erkennbaren Luftführungsgehäuse 34 gebildet. Eine untere Gehäuseschale 36 ist auf die Oberseite des Brennergehäuses 16 aufgesetzt und weist an einem Endbereich die Eintrittsöffnung 24 zum Eintritt der aus dem Wärmetauscherbereich austretenden erwärmten Luft auf. Eine obere Gehäuseschale 38 entspricht der Außenumfangskontur der unteren Gehäuseschale 36 und kann zum Bilden eines mit Ausnahme im Bereich der Austrittsdüse 20 nach außen im Wesentlichen dicht abgeschlossenen Gehäuses mit der unteren Gehäuseschale 36 fest verbunden werden. Das Luftführungsgehäuse 34 ist von abgeflachter Struktur, d. h. bildet zwischen der Öffnung 24 und einer Austrittsöffnung 40 der Austrittsdüse 20 einen abgeflachten Strömungsquerschnitt.

Um die über die Öffnung 24 in das Luftführungsgehäuse 34 eintretende Luft verbessert in Richtung zur Austrittsdüse 20 zu leiten, sind im Strömungsweg zwischen der Öffnung 24 und der Austrittsöffnung 40 der Austrittsdüse 20 beispielsweise zwei gekrümmte Luftleitelemente 42, 43 vorgesehen. Ferner ist in dem Luftführungsgehäuse 34 ein Abdeckelement 44 vorgesehen. Dieses Abdeckelement 44 ist im Wesentlichen auf die untere Gehäuseschale 36 aufgesetzt und begrenzt zusammen mit dieser im Wesentlichen den Luftführungskanalbereich 18 zwischen der Öffnung 24 und der Austrittsöffnung 40 der Austrittsdüse 20. Insbesondere erkennt man, dass aufgrund der abgeflachten Formgebung des Luftführungsgehäuses 34 durch das Abdeckelement 44 der Luftführungskanalbereich 18 im Wesentlichen an einer der durch Abflachung gebildeten Breitseiten begrenzt ist, nämlich in Fig. 2 der oberen Seite, während nach unten hin eine Begrenzung durch die untere Gehäuseschale 36 vorgesehen ist.

Das beispielsweise durch Umformen von Blechmaterial gebildete Abdeckelement 44 weist über seine gesamte Oberfläche hinweg eine Mehrzahl von Öffnungen 46 auf. Durch das Bereitstellen dieses Abdeckelements 44 mit der Vielzahl an darin ausgebildeten Öffnungen 46 ist für die zwischen der Öffnung 24 und der Austrittsöffnung 40 strömende Luft eine Schalldämpfungsfunktion vorgesehen. Diese aus dem Bereich des Heizbrenners 14 austretende Luft kann als Geräuschträger wirken, was insbesondere aufgrund der Tatsache, dass die erfindungsgemäße Heizeinrichtung 10 zum Einbau in den Fahrgastinnenraum eines Fahrzeugs oder einen sonstigen zu erwärmenden Raum vorgesehen ist, für in diesem Raum sich befindende Personen unangenehm sein kann. Durch das Bereitstellen einer allgemein mit 48 bezeichneten Schalldämpfungsanordnung, umfassend das Abdeckelement 44, wird die Geräuschabgabe nach außen hin deutlich gemindert.

Die Schalldämpfungsfunktion durch Schallabsorbtion kann weiter noch dadurch verbessert werden, dass in dem zwischen dem Abdeckelement 44 und der oberen Gehäuseschale 38 vorhandenen Volumen schallabsorbierendes Material positioniert wird. Dies kann jedwedes schallabsorbierende Material, wie z. B. Vliesmaterial, Filzmaterial, Fasermattenmaterial, Schaumstoff oder dergleichen sein, welches diesen Volumenbereich ausfüllen kann und welches für die im Betrieb auftretenden Temperaturen von bis zu 150 °C geeignet ist. In Zusammenwirkung dieses schallabsorbierenden Materials mit dem Abdeckelement 44 wird eine Schalldämpfungsanordnung 48 erhalten, die eine hervorragende Schalldämpfungscharakteristik hat. Dabei hat das Abdeckelement 44 neben seiner bereits angesprochenen Schalldämpfungsfunktion auch die Aufgabe, bei Einsatz eines Schalldämpfungsmaterials mit geringer Formstabilität bzw. nicht vorgeformtem Schalldämpfungsmaterial dafür zu sorgen, dass der Luftführungskanalbereich 18 zum Durchtritt von erwärmter Luft frei bleibt.

Es sei hier darauf hingewiesen, dass selbstverständlich die Schalldämpfungsanordnung 48 ein in Richtung zum Luftführungskanalbereich 18 hin mit der Form des in Fig. 2 erkennbaren Abdeckelementes 44 vorgeformtes, ansonsten jedoch in die obere Gehäuseschale 38 eingepasstes schalldämpfendes Material umfassen kann, das dann gleichzeitig auch die Funktion der Begrenzung des Luftführungskanalbereichs 18 an einer seiner Breitseiten übernimmt, die in der dargestellten Ausgestaltungsform von dem Abdeckelement 44 übernommen wird.

Ein wesentlicher Vorteil der vorangehend beschriebenen erfindungsgemäßen Heizeinrichtung 10 ist, dass bei kompakter Baugröße insbesondere auch aufgrund der abgeflachten Formgebung des Luftführungskanalbereichs 18 bzw. des Luftführungsgehäuses 34 durch integriertes Bereitstellen der Schalldämpfungsanordnung 48 an der vom Heizbrenner 14 abgewandten Seite des Luftführungsgehäuses 34 eine den Komfort für die in einem Fahrgastraum sich befindenden Personen wesentlich erhöhende Schalldämpfungsfunktion erhalten wird.

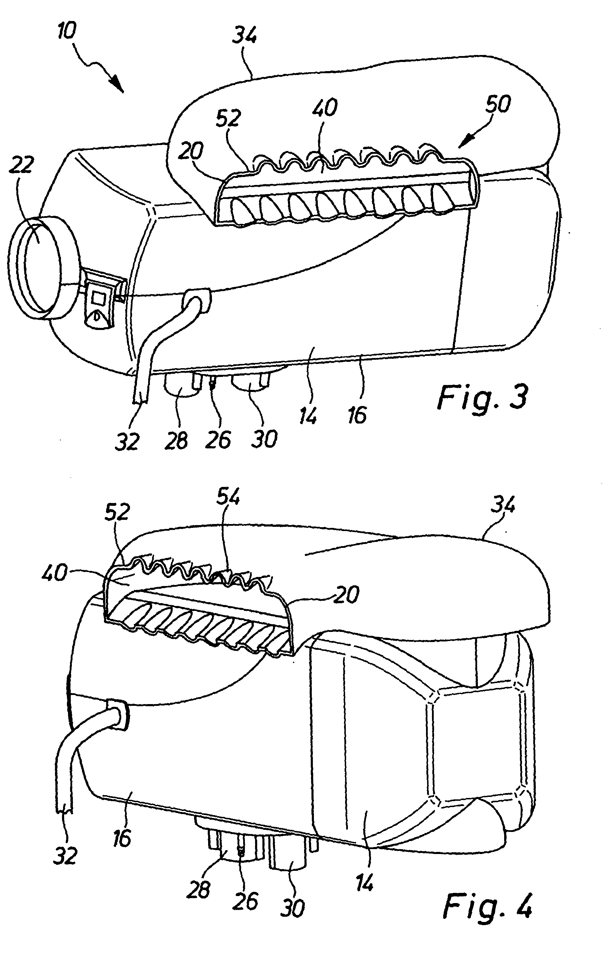

Die Fig. 3 und 4 zeigen eine Weiterbildung der erfindungsgemäßen Heizeinrichtung, welche selbstverständlich auch die vorangehend mit Bezug auf die Fig. 1 und 2 beschriebenen Merkmalsgruppen, die zur Schalldämpfung beitragen, aufweisen kann.

Ein Problem bei derartigen Heizeinrichtungen ist, dass der Luftströmungsweg zwischen dem in unmittelbarer Nähe des Heizbrenners 14 vorgesehenen Wärmetauscherbereich und der Austrittsöffnung 40 der Austrittsdüse 20 vergleichsweise kurz ist. Dies bedeutet, dass die aus der Austrittsdüse 40 austretende erwärmte Luft eine relativ hohe Temperatur haben wird. Wird diese Luft durch einen stark gerichteten Luftstrom in einen vergleichsweise kleinen Volumenbereich des zu erwärmenden Raums abgegeben, so kann dies für die in diesem Raum sich befindenden Personen zu Unannehmlichkeiten führen. Ist beispielsweise eine derartige Heizeinrichtung unter einem Fahrersitz angeordnet und zur Abgabe von erwärmter Luft in den Fondbereich positioniert, so kann dies dazu führen, das die im Fondbereich sitzenden Personen, insbesondere die unmittelbar hinter dem Fahrersitz sitzende Person, unangenehm hohe Temperaturen verspüren. Um dies zu vermeiden, ist gemäß der in den Figuren 3 und 4 dargestellten Weiterbildung der erfindungsgemäßen Heizeinrichtung 10 im Bereich der Austrittdüse 40 eine allgemein mit 50 bezeichnete Diffusoranordnung vorgesehen. In der in den Fig. 3 und 4 dargestellten Ausgestaltungsvariante weist diese Diffusoranordnung 50 einen konturiert ausgebildeten Randbereich 52 des Luftführungsgehäuses 34 im Bereich der Austrittsdüse 20 auf. Das heißt, die in Anpassung an die abgeflachte Form des Luftführungsgehäuses 40 ebenfalls abgeflachte oder langgestreckte Austrittsöffnung 40 ist an ihren beiden Längsseiten oder Längsrändern durch eine nicht glatte, sondern beispielsweise gewellte Formgebung des Randes 52 strukturiert. Dies führt dazu, dass in der aus dieser Austrittsöffnung 40 herausströmenden Luft Verwirbelungen und Turbulenzen erzeugt werden. Infolgedessen wird das Auftreten eines stark gerichteten Luftstroms verhindert und es wird ein diffuser Luftaustritt im Bereich der Austrittsöffnung 40 erhalten. Es sei hier darauf hingewiesen, dass selbstverständlich die Konturierung des Randbereichs 52 verschiedenste Formgebungen haben kann. Es kann das in den Fig. 3 und 4 erkennbare wellenartige Muster durch Bereitstellen einer Mehrzahl von näherungsweise halbkegelartigen Ausformungen 54 erhalten werden. Selbstverständlich ist hier auch ein Zickzackmuster oder jedwede andere zur Strömungsverwirbelung beitragende Formgebung denkbar.

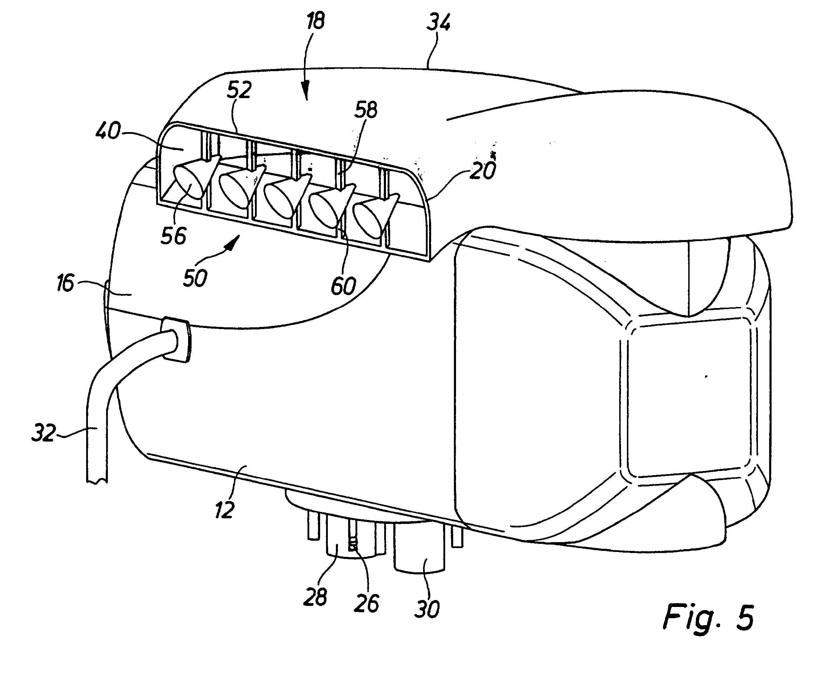

Bei der in Fig. 5 dargestellten Ausgestaltungsvariante umfasst die Diffusoranordnung 50 eine Mehrzahl von in Reihe entlang der langgestreckten Austrittsöffnung 40 angeordneten Diffusorelementen 56. Jedes dieser Diffusorelemente 56 weist näherungsweise die Form eines Kegels auf und ist mit dem spitzen Ende in Richtung zum Luftführungskanalbereich 18 hin gerichtet. Um diese Diffusorelemente 56 in der Öffnung 40, also entfernt vom die Öffnung 40 umgebenden Randbereich 52 anordnen zu können, ist beispielsweise jedes dieser Diffusorelemente durch zwei Stegabschnitte 58, 60 am Luftführungsgehäuse 34 getragen. Auch das Bereitstellen dieser Diffusorelemente 56 sorgt für eine Verwirbelung der austretenden Luft, mit der Folge, dass diese unmittelbar nach dem Austritt aus der Austrittsöffnung 40 in dem zu erwärmenden Raumbereich verteilt wird.

Es sei darauf hingewiesen, dass selbstverständlich das Bereitstellen der in Fig. 5 erkennbaren Diffusorelemente 56 auch in Kombination mit dem nicht glatten, sondern strukturierten Randbereich 52, wie in den Fig. 3 und 4 dargestellt, möglich ist.

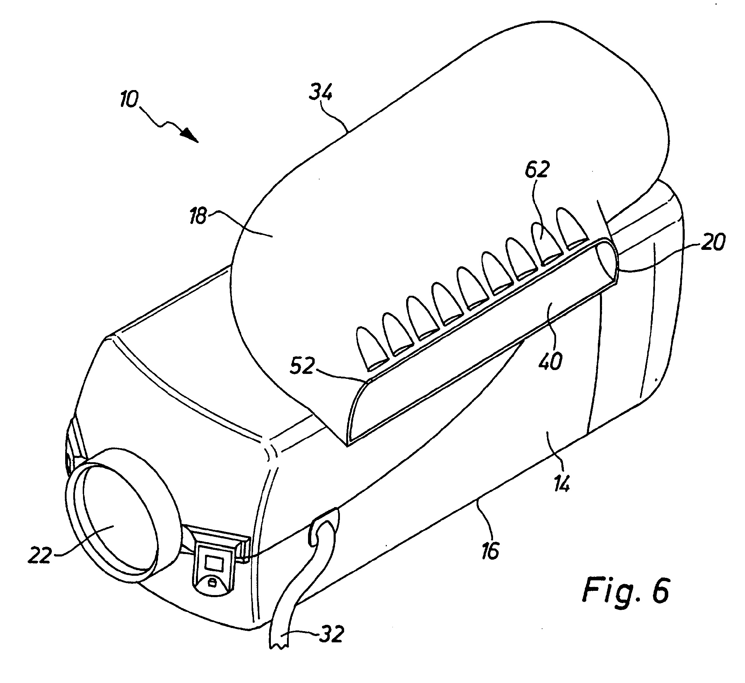

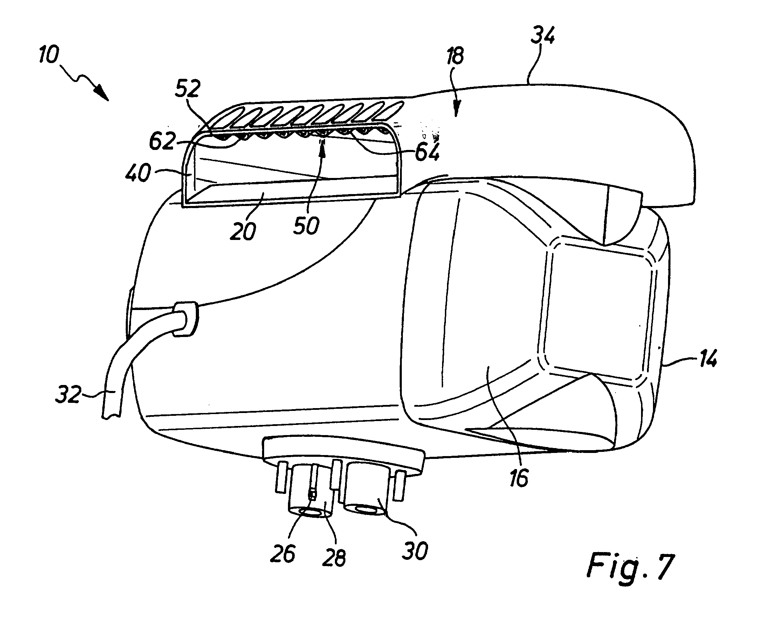

In den Fig. 6 und 7 ist eine weitere Ausgestaltungsform einer erfindungsgemäßen Heizeinrichtung 10 dargestellt. Man erkennt, dass im Luftführungsgehäuse 34 nahe dem die Austrittsöffnung 40 der Austrittsdüse 20 umgebenden Randbereich 52 entlang einer der Langseiten eine Reihe von Neben-Lufteintrittsöffnungen 62 vorgesehen ist. Diese Neben-Lufteintrittsöffnungen 62 sind in Richtung zum Inneren des Luftführungsgehäuses 34, also im Wesentlichen in einer Richtung stromaufwärts, jeweils durch an das Luftführungsgehäuse 34 angeformte oder angesetzte haubenartige Abdeckbereiche 64 abgedeckt. Die Folge davon ist, dass über die Neben-Lufteintrittsöffnungen 62 aus der Umgebung des Luftführungsgehäuses 34 eintretende Luft sich unmittelbar mit dem durch das Luftführungsgehäuse 34 hindurchtretenden Luftstrom in Richtung zur Austrittsöffnung 40 der Austrittsdüse 20 bewegen wird. Des Weiteren verhindern die Abdeckbereiche 64 das Austreten von erwärmter Luft aus dem Luftführungsgehäuse 34 über die Neben-Lufteintrittsöffnungen 62. Aufgrund der Tatsache, dass die erwärmte Luft durch das Luftführungsgehäuse 34 bzw. den Luftführungskanalbereich 18 mit einer bestimmten Geschwindigkeit strömt und somit einen bestimmten dynamischen Druck aufweist, ist der statische Druck in der strömenden Luft bezüglich der Umgebung abgesenkt. Aufgrund dieses Druckgefälles, d. h. des im Inneren des Luftführungsgehäuses 34 vorhandenen statischen Unterdrucks, wird Luft aus der Umgebung des Luftführungsgehäuses 34 über die Neben-Lufteintrittsöffnungen 62 in den unmittelbar vor der Austrittsöffnung 40 liegenden Abschnitt des Luftführungskanalbereichs 18 eintreten und sich dort mit der erwärmten Luft vermischen. Es wird somit für eine Vorkühlung dieser mit sehr hoher Temperatur heranströmenden erwärmten Luft gesorgt, so dass ebenfalls eine lokale Überhitzung in einem vergleichsweise kleinen Volumenbereich vermieden werden kann.

Des Weiteren sei darauf hingewiesen, dass die den Luftaustritt aus den Neben-Lufteintrittsöffnungen verhindernden Abdeckbereiche 64, welche, wie man vor allem in Fig. 7 erkennt, sehr nahe am Randbereich 52 vorgesehen sind, nach Art der in den Fig. 3 und 4 beschriebenen Ausgestaltungsform eine Diffusoranordnung 50 bereitstellen, die nicht nur für eine Verwirbelung der aus dem Luftführungskanalbereich 18 austretenden erwärmten Luft, sondern auch für eine schnellere und bessere Durchmischung mit der über Neben-Lufteintrittsöffnungen 62 hinzugetretenen nicht erwärmten Luft sorgt.

Auch hier sei darauf hingewiesen, dass selbstverständlich eine Kombination beispielsweise mit den in Fig. 5 erkennbaren Diffusorelementen möglich ist. Ferner sei noch einmal darauf hingewiesen, dass bei allen erfindungsgemäßen Ausgestaltungsformen selbstverständlich im Bereich des Luftführungsgehäuses die mit Bezug auf die Fig. 2 beschriebene Schalldämpfungsanordnung zum Einsatzkommen kann.

Durch die vorliegende Erfindung wird eine in einen zu erwärmenden Raum, beispielsweise einen Fahrgastraum eines Fahrzeugs, einzubauende oder einbaubare Heizeinrichtung bereitgestellt, die aufgrund der Tatsache, dass sie für eine deutliche Verminderung der Geräuschabgabe sorgt, und aufgrund der Tatsache, dass sie die Überhitzung in einem an die Heizeinrichtung angrenzenden lokalen Bereich vermeidet, für eine deutliche Erhöhung des Komforts sorgt.

## Patentansprüche

1. Heizeinrichtung zur Anordnung in einem zu beheizenden Raum, insbesondere Fahrgastraum eines Fahrzeugs, umfassend eine Heizeranordnung (14), eine Wärmetauscheranordnung zur Erwärmung von die Heizeinrichtung (10) durchströmender Luft sowie einen Luftführungskanalbereich (18), über welchen die von der Wärmetauscheranordnung erwärmte Luft zu einer Austrittsdüsenanordnung (20) geleitet wird, **dadurch gekennzeichnet dass**
dem Luftführungskanalbereich (18) eine Schalldämpfungsanordnung (48) zugeordnet ist, wobei
der Luftführungskanalbereich (18) wenigstens bereichsweise mit abgeflachtem Strömungsquerschnitt ausgebildet ist und an wenigstens einer Breitseite die Schalldämpfungsanordnung (48) den Luftführungskanalbereich (18) wenigstens bereichsweise begrenzt.

2. Heizeinrichtung nach Anspruch 1 **dadurch gekennzeichnet, dass** die Schalldämpfungsanordnung (48) ein flexibles Schalldämpfungsmaterial, vorzugsweise Filzmaterial, Vliesmaterial, Fasermattenmaterial, Schaumstoff oder dergleichen, umfasst.

3. Heizeinreichtung nach einem der Ansprüche 1 oder 2, **dadurch gekennzeichnet, dass** die Schalldämpfungsanordung ein mit einer Mehrzahl von Öffnungen versehenes Luftführungselement (44) umfasst.

4. Heizeinrichtung nach Anspruch 2 und Anspruch 3, **dadurch gekennzeichnet, dass** das flexible Schalldämpfungsmaterial an einer von dem Luftführungskanalbereich (18) abgewandten Seite des Luftführungselementes (44) vorgesehen ist.

5. Heizeinrichtung nach einem der Ansprüche 1 bis 4, **dadurch gekennzeichnet, dass** im Bereich der Austrittsdüsenaordnung (20) eine Diffusoranordnung (50) vorgesehen ist.

6. Heizeinrichtung nach Anspruch 5, **dadurch gekennzeichnet, dass** die Diffusoranordnung (50) an einem Austrittsdüsenrandbereich (52) vorgesehen ist.

7. Heizeinrichtung nach Anspruch 6, **dadurch gekennzeichnet, dass** die Diffusoranordnung (50) wenigstens teilweise durch einen vorzugsweise wellenartig konturierten Austrittsrandbereich (52) der Austrittsdüsenanordnung (20) gebildet ist.

8. Heizeinrichtung nach einem der Ansprüche 5 bis 7, **dadurch gekennzeichnet, dass** die Diffusoranordnung (50) wenigstens ein im Bereich einer Austrittsöffnung (40) der Austrittsdüsenanordnung (20) angeordnetes Diffusorelement (56) umfasst.

9. Heizeinrichtung nach Anspruch 8, **dadurch gekennzeichnet, dass** das wenigstens eine Diffusorelement (56) kegelartig ausgebildet ist.

10. Heizeinrichtung nach einem der Ansprüche 1 bis 9, **gekennzeichnet durch** wenigstens eine Neben-Lufteintrittsöffnung (62), **durch** welche Umgebungsluft in den Luftführungskanalbereich (18) eintreten kann.

11. Heizeinrichtung nach Anspruch 10, **dadurch gekennzeichnet, dass** die wenigstens eine Neben-Lufteintrittsöffnung (62) im Bereich der Austrittsdüsenanordnung (20) vorgesehen ist.

12. Heizeinrichtung nach Anspruch 11, **gekennzeichnet durch** ein Abschirmorgan (64), **durch** welches die wenigstens eine Neben-Lufteintrittsöffnung (62) gegen den Austritt von in dem Luftführungskanalbereich (18) strömender, erwärmter Luft abgeschirmt ist.

13. Heizeinrichtung nach einem der Ansprüche 1 bis 12, **gekennzeichnet durch** eine Trägeranordnung (12) zum Positionieren der Heizeinrichtung (10) an oder unter einem Fahrzeugsitz.

## Claims

1. A heating apparatus to be mounted in a space to be heated, in particular the passenger compartment of a vehicle, comprising a heater assembly (14), a heat-exchanger assembly for heating air flowing through the heating apparatus (10), and also an air-ducting passage zone (18) through which the air heated by the heat-exchanger assembly is directed to an outlet nozzle assembly (20), **characterised in that** a silencer assembly (48) is associated with the air-ducting passage zone (18), wherein the air-ducting passage zone (18) is designed at least in zones with a flattened flow cross-section and on at least one wide side the silencer assembly (48) limits the air-ducting passage zone (18) at least in zones.

2. A heating apparatus according to Claim 1, **characterised in that** the silencer assembly (48) comprises a flexible sound-damping material, preferably felt material, non-woven fabric material, fibre mat material, foamed material or the like.

3. A heating apparatus according to either Claim 1 or Claim 2, **characterised in that** the silencer assembly (48) comprises an air-ducting element (44) provided with a plurality of openings.

4. A heating apparatus according to Claim 2 and Claim 3, **characterised in that** the flexible sound-damping material is provided on one side of the air-ducting element (44) remote from the air-ducting passage zone (18).

5. A heating apparatus according to any one of Claims 1 to 4, **characterised in that** a diffusor assembly (50) is provided in the vicinity of the outlet nozzle assembly (20).

6. A heating apparatus according to Claim 5, **characterised in that** the diffusor assembly (50) is provided on an outlet nozzle edge zone (52).

7. A heating apparatus according to Claim 6, **characterised in that** the diffusor assembly (50) is formed at least partly by an outlet edge zone (52) of the outlet nozzle assembly (20), which is preferably of undulatory contour.

8. A heating apparatus according to any one of Claims 5 to 7, **characterised in that** the diffusor assembly (50) comprises at least one diffusor element (56) provided in the vicinity of an outlet opening (40) of the outlet nozzle assembly (20).

9. A heating apparatus according to Claim 8, **characterised in that** the at least one diffusor element (56) is conically shaped.

10. A heating apparatus according to any one of Claims 1 to 9, **characterised by** at least one secondary air-inlet opening (62) through which ambient air can enter the air-ducting passage zone (18).

11. A heating apparatus according to Claim 10, **characterised in that** the at least one secondary air-inlet opening (62) is provided in the vicinity of the outlet nozzle assembly (20).

12. A heating apparatus according to Claim 11, **characterised by** a shielding member (64) by which the at least one secondary air-inlet opening (62) is shielded from the escape of heated air flowing into the air-ducting passage zone (18).

13. A heating apparatus according to any one of Claims 1 to 12, **characterised by** a support assembly (12) for positioning the heating apparatus (10) on or under a vehicle seat.

## Revendications

1. Appareil de chauffage à agencer dans un espace à chauffer, en particulier l'habitacle d'un véhicule, comprenant un dispositif de chauffage (14), un dispositif d'échangeur thermique pour chauffer l'air passant au travers de l'appareil de chauffage (10) ainsi qu'une zone de canalisation de l'air (18), par l'intermédiaire de laquelle l'air chauffé par le dispositif d'échangeur thermique est dirigé vers un dispositif de buse de sortie (20), **caractérisé en ce qu'**un dispositif d'isolation phonique (48) est adjoint à la zone de canalisation de l'air (18), la zone de canalisation de l'air (18) étant formée au moins partiellement d'une section d'écoulement aplatie, et le dispositif d'isolation phonique (48) limitant au moins partiellement la zone de canalisation de l'air (18) au niveau au moins d'un côté large.

2. Appareil de chauffage selon la revendication 1, **caractérisé en ce que** le dispositif d'isolation phonique (48) comprend un matériau d'isolation phonique souple, de préférence du feutre, un tissu non tissé, des réseaux de fibres, un produit alvéolaire ou analogues.

3. Appareil de chauffage selon l'une des revendications 1 ou 2, **caractérisé en ce que** le dispositif d'isolation phonique comprend un élément de guidage de l'air (44) pourvu d'une pluralité d'orifices.

4. Appareil de chauffage selon la revendication 2 et la revendication 3, **caractérisé en ce que** le matériau d'isolation phonique souple est prévu sur une face de l'élément de guidage de l'air (44) opposée à la zone de canalisation de l'air (18).

5. Appareil de chauffage selon l'une des revendications 1 à 4, **caractérisé en ce qu'**un dispositif diffuseur (50) est prévu dans la zone du dispositif de buse de sortie (20).

6. Appareil de chauffage selon la revendication 5, **caractérisé en ce que** le dispositif diffuseur (50) est prévu sur une zone de bord de la buse de sortie (52).

7. Appareil de chauffage selon la revendication 6, **caractérisé en ce que** le dispositif diffuseur (50) est conçu au moins partiellement par une zone de bord de sortie (52) du dispositif de buse de sortie (20) dont le contour est de préférence ondulé.

8. Appareil de chauffage selon l'une des revendications 5 à 7, **caractérisé en ce que** le dispositif diffuseur (50) comprend au moins un élément diffuseur (56) agencé dans la zone d'un orifice de sortie (40) du dispositif de buse de sortie (20).

9. Appareil de chauffage selon la revendication 8, **caractérisé en ce que** le au moins un élément diffuseur (56) est conçu de façon conique.

10. Appareil de chauffage selon l'une des revendications 1 à 9, **caractérisé par** au moins un orifice d'admission d'air secondaire (62) au travers duquel l'air ambiant peut pénétrer dans la zone de canalisation de l'air (18).

11. Appareil de chauffage selon la revendication 10, **caractérisé en ce que** le au moins un orifice d'admission d'air secondaire (62) est prévu dans la zone du dispositif de buse de sortie (20).

12. Appareil de chauffage selon la revendication 11, **caractérisé par** un organe de protection (64) grâce auquel le au moins un orifice d'admission d'air secondaire (62) est protégé contre la sortie de l'air chauffé circulant dans la zone de canalisation de l'air (18).

13. Appareil de chauffage selon l'une des revendications 1 à 12, **caractérisé par** un dispositif porteur (12) pour positionner l'appareil de chauffage (10) sur ou sous un siège de véhicule.
